(19) Europäisches Patentamt
European Patent Office
Office européen des brevets

(11) Publication number: **0 066 309**
**B1**

(12) # EUROPEAN PATENT SPECIFICATION

(45) Date of publication of patent specification: **27.03.85**

(51) Int. Cl.$^4$: **B 01 D 53/34,** C 01 B 17/05, C 10 K 1/08

(21) Application number: **82200552.6**

(22) Date of filing: **06.05.82**

(54) **Sulphur recovery process.**

(30) Priority: **26.05.81 US 267196**

(43) Date of publication of application:
**08.12.82 Bulletin 82/49**

(45) Publication of the grant of the patent:
**27.03.85 Bulletin 85/13**

(84) Designated Contracting States:
**BE DE FR GB IT NL**

(58) References cited:
**US-A-4 009 251**
**US-A-4 091 073**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Blytas, George Constantin**
**14323 Apple Tree**
**Houston Texas 77079 (US)**
Inventor: **Diaz, Zaida**
**11606 Village Place**
**Houston Texas 77077 (US)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 066 309 B1

**Description**

The invention relates to a process for the removal of $H_2S$ from a sour gaseous stream, in which process

a) the sour gaseous stream is contacted in a contacting zone at a temperature below the melting point of sulphur with a reactant solution containing an effective amount of a reactant comprising one or more ions of a polyvalent metal and/or one or more chelate compounds of a polyvalent metal and

b) a sweet gaseous stream is separated from an admixture containing crystalline sulphur and a reduced reactant, and at least a portion of the said crystalline sulphur is isolated. Such a process is described in US—A—4 009 251.

The presence of significant quantities of $H_2S$ and $CO_2$ in various "sour" industrial gaseous streams poses a persistent problem. A gaseous stream is named "sour" if it contains significant quantities of $H_2S$ and/or $CO_2$. Although various procedures have been developed to remove and recover these contaminants, most such processes are deficient, for a variety of reasons.

In one cyclic method currently attracting attention, the sour gaseous stream is contacted, preferably with a solvent which contains a regenerable reactant, to produce solid elemental sulphur which is recovered either before or after regeneration. Suitable reactants include ions of polyvalent metals, such as iron, vanadium, copper, manganese, and nickel ions, and include chelates of polyvalent metals. Preferred reactants are co-ordination complexes in which the polyvalent metals form chelates with specified organic acids.

In yet another process, e.g. that disclosed in US—A—4 091 073, $CO_2$ present in the gaseous stream is also removed by the use of a suitable absorbent selective for $CO_2$.

Because these "clean-up" processss generally represent significant costs to manufacturing operations, any improvements in such processes which increase their efficiency may have great economic importance. For example any low cost measure which will increase the rates of operation of the processes will result in significant savings.

It is an object of the present invention to provide a process for the removal of $H_2S$ having increased rates of reaction, both in the $H_2S$ conversion stage, and in the regeneration stage.

Accordingly, the invention provides a process for the removal of $H_2S$ from a sour gaseous stream, in which process

a) the sour gaseous stream is contacted in a contacting zone at a temperature below the melting point of sulphur with a reactant solution containing an effective amount of a reactant comprising one or more ions of a polyvalent metal and/or one or more chelate compounds of a polyvalent metal and

b) a sweet gaseous stream is separated from an admixture containing crystalline sulphur and a reduced reactant, and at least a portion of the said crystalline sulphur is isolated, characterized in that in step a an effective amount of a reaction rate modifier comprising one or more alkanediols having from 4 to 12 carbon atoms per molecule is added to the reactant solution.

The alkanediols used in the present process have the general formula $HO—C_nH_{2n}OH$ in which n is an integer in the range from 4 to 12. Such alkanediols are useful in improving the rate of the conversion reaction and the regeneration reaction. Preferably, the reactant solution in step a) contains one or more alkanediols having from 4 to 8 carbon atoms per molecule. Particularly preferred alkanediols are 2,3-butanediol and 1,4-butanediol. The alkanediol or alkanediols is (are) supplied in an effective amount, i.e. an amount sufficient to improve the rate of reaction. This amount may be determined by experimentation. In general, the amount employed will be in the range of from 0.1 per cent to 10 per cent by weight, based on the reactant solution, with an amount of 0.5 per cent to 1 per cent by weight being preferred. Those skilled in the art may adjust the amount added to produce optimum results, a primary consideration being simply the cost of the alkanediol added.

The reduced reactant may be given any suitable destination, but for economical reasons the reactant is preferably regenerated. So, according to a preferred embodiment of the present invention the reduced reactant present in the admixture separated in step b) or left behind subsequent to the isolation of sulphur, is contacted in a regeneration zone with an oxygen-containing gas, producing a regenerated reactant-containing admixture. In other words, at least a portion of the sulphur crystals may be isolated, prior or subsequent to regenerating the reactant.

The regenerated reactant-containing admixture may be used in any suitable manner; preferably, the process according to the invention is operated as a cyclic procedure by returning regenerated reactant-containing admixture to the contacting zone in step a), the rate modifier still being present in the returned admixture.

The reactant solution used in step a) is suitably an aqueous solution in those cases where $H_2S$ is the only contaminant to be removed from sour gaseous streams.

The manner of recovering the sulphur is a matter of choice. For example, the sulphur may be recovered by settling, filtration, liquid flotation or by suitable devices, such as a hydrocyclone.

Alternatively, the sulphur may be recovered as described in EP—A—66310 (Priority: 26.05.81, Date of filing, 06.05.82, Date of publication of the application:08.12.82).

The reduced ions or chelate compounds of polyvalent metals are regenerated by contacting the mixture with an oxygen-containing gas. Examples of oxygen-containing gases are air, air enriched with oxygen and pure oxygen. The oxygen oxidizes the reduced metal ions or the metal of the chelate or chelates to a higher

valence state, and the regenerated mixture may be returned to the contacting zone in step a), subsequent to the isolation of sulphur. The rate modifiers employed herein are effective in increasing the rate of regeneration.

The process according to the present invention is very suitable for the removal of $H_2S$ and $CO_2$ from sour gaseous streams. So, in another embodiment of the invention, a sour gaseous stream containing $H_2S$ and $CO_2$ is contacted with a reactant solution also containing an absorbent selective for $CO_2$, at a temperature below the melting point of sulphur, the reactant solution and procedure being similar to that described hereinbefore. This reactant solution may also contain water. The absorbent is preferably selective for $H_2S$ as well. A purified or "sweet" gaseous stream is produced which meets general industrial and commercial $H_2S$ and $CO_2$ specifications. The $CO_2$ is absorbed and the $H_2S$ is immediately converted to sulphur by the chelate compound of the polyvalent metal or ion of the polyvalent metal. In the process the reactant is reduced, and the sulphur may be treated, as described hereinbefore. The sulphur crystals may be removed before or after regeneration of the admixture, and the rates of reaction are increased.

The invention also provides, in this embodiment, for the regeneration of the reactant and the absorbent. Specifically, the loaded absorbent mixture and the reduced ions of the polyvalent metal or metals and reduced chelate compounds of the polyvalent metal or metals, or mixtures thereof, are regenerated by contacting the mixture with an oxygen-containing gas. The oxygen is preferably supplied as air, or air enriched with oxygen. If significant quantities of $CO_2$ have been absorbed the reactant-containing solution is preferably stripped, such as by heating or pressure reduction, to remove the bulk of the $CO_2$ before regeneration of the reactant (either before or after sulphur removal). $CO_2$ may be stripped from the sulphur- and reduced reactant-containing admixture separated in step b) or from the admixture left behind subsequent to the isolation of sulphur. Alternatively, or if small quantities of $CO_2$ are absorbed, the $CO_2$ may simply be stripped in the regeneration.

As indicated, the regeneration of the reactant is accomplished by the utilization of oxygen, preferably as air. The oxygen will accomplish two functions, the oxidation of the metal to its higher valence state, and the stripping of any residual $CO_2$ (if originally present) from the absorbent mixture. The oxygen (in whatever form supplied) is supplied in a stoichiometric equivalent or excess with respect to the amount of metal ion or chelate present in the mixture. Preferably, the oxygen is supplied in an amount in the range of from about 1.2 to about 3 times excess.

The particular type of gaseous stream treated is not critical, as will be evident. Streams particularly suited to removal of $H_2S$ and $CO_2$ by the process of the invention are, as indicated, naturally occurring gases, synthesis gases, process gases, and fuel gases produced by gasification procedures, e.g. gases produced by the gasification of coal, petroleum, shale, tar sands, etc. Particularly preferred are coal gasification streams, natural gas streams and refinery feedstocks composed of gaseous hydrocarbon streams, especially those streams of this type having a low ratio of $H_2S$ to $CO_2$, and other gaseous hydrocarbon streams. The words "hydrocarbon stream(s)", as employed herein, are intended to include streams containing significant quantities of hydrocarbons (both paraffinic and aromatic), it being recognized that such streams may contain significant "impurities" not technically defined as a hydrocarbon. Streams containing principally a single hydrocarbon, e.g. ethane, are eminently suited to the process of the invention. Streams derived from the gasification and/or partial oxidation of gaseous or liquid hydrocarbon may be treated according to the invention. The $H_2S$ content of the type of gaseous streams contemplated will vary extensively, but, in general, will range from 0.1 per cent to 10 per cent by volume. $CO_2$ content may also vary, but preferably will range from 0.5 per cent to 50.0 per cent by volume. Obviously, the contents of $H_2S$ and $CO_2$ present are not generally a limiting factor in the process of the invention.

The temperatures employed in step a), in the presence or absence of an absorbent selective for $CO_2$, are not generally critical, except that the reaction is carried out below the melting point of sulphur, and, if an absorbent is used, the temperatures employed must permit acceptable absorption of $CO_2$. In many commercial applications, such as the removal of $H_2S$ and $CO_2$ from natural gas to meet pipeline specifications, absorption at ambient temperatures is desired, since the cost of refrigeration would exceed the benefits obtained due to increased absorption at the lower temperature. In general, temperatures in the range of from 10°C to 80°C are suitable, and temperatures in the range of from 20°C to 45°C are preferred. Contact times may be in the range of from about 1 s to about 120 s, with contact times in the range of from 2 s to 60 s being preferred.

Similarly, in the regeneration or stripping, temperatures may be varied widely. Preferably, the regeneration temperature should be substantially the same as the absorption temperature in the contacting zone in step a). If heat is added to assist regeneration, cooling of the aqueous admixture is required before return of the admixture to the contacting zone in step a). In general, temperatures in the range of from 10°C to 80°C, preferably 20°C to 40°C, may be employed.

Pressure conditions in the contacting zone of step a) may vary widely, depending on the pressure of the gaseous stream to be treated. For example, pressures in the contacting zone in step a) may vary from 1 bar up to 152 or even 203 bar. Pressures in the range of from 1 bar to about 101 bar are preferred. In the regeneration or

desorption zone, pressures may be varied considerably, and will preferably be in the range of from about 0.5 bar to about 3 or 4 bar. The pressure-temperature relationships involved are well understood and need not be detailed herein. Other conditions of operation for this type of reaction process, e.g. pH, etc. are further described in U.S.—A—3,068,065 and U.S.—A—4,009,251. Preferably, if the iron chelate of nitrilotriacetic acid is used, the pH in the process of the invention will range from about 6 to about 7.5 and the molar ratio of the nitrilotriacetic acid to the iron is from about 1.2 to 1.4. The process is preferably conducted continuously.

As indicated, the $H_2S$, when contacted, is rapidly converted in the process of the invention by the polyvalent metal ions, polyvalent metal chelate, etc. to elemental sulphur. Since many polyvalent metal compounds and polyvalent metal chelates have limited solubility in many solvents or absorbents, the polyvalent metal compounds or chelates are preferably supplied in admixture with the liquid absorbent and water. The amount of polyvalent metal ion, polyvalent metal chelate, or mixtures thereof, supplied is an effective amount, i.e. an amount sufficient to convert all or substantially all of the $H_2S$ in the gaseous stream, and will generally be on the order of at least about one mol per mol of $H_2S$. Ratios of from about 1 or 2 mol to about 15 mol of polyvalent metal ion or chelate per mol of $H_2S$ may be used, with ratios of from about 2 mol per mol about 5 mol of polyvalent metal ion or chelate per mol of $H_2S$ being preferred. The matter of preparing the admixture containing an absorbent is a matter of choice. For example, the compound or chelate may be added to the absorbent, and, if necessary, then water added. The amount of water added will normally be just that amount necessary to achieve solution of the polyvalent metal compound or chelate, and can be determined by routine experimentation. Since the polyvalent metal compound or chelate may have a significant solubility in the solvent, and since water is produced by the reaction of the $H_2S$ and the ions or chelate, precise amounts of water to be added cannot be given. In the case of absorbents having a low solubility for the polyvalent metal ion or chelate, approximately 5 per cent to 10 percent water by volume, based on the total volume of the absorbent mixture, will generally provide solvency. Preferably, however, the polyvalent ions or chelate are added as an aqueous solution to the liquid absorbent. Where they are supplied as an aqueous solution, the amount of solution supplied may be 20 per cent to 80 per cent by volume of the total absorbent admixture supplied to the contacting zone of step a). A polyvalent metal chelate solution will generally be supplied as an aqueous solution having a concentration in the range of from 0.1 molar to 3 molar, and a concentration of about 1.0 molar is preferred.

Any polyvalent metal can be used, but iron, copper and manganese are preferred, particularly iron. The polyvalent metal should be capable of oxidizing hydrogen sulphide, while being reduced itself from a higher to a lower valence state, and should then be oxidized by oxygen from the lower valence state to the higher valence state in a typical redox reaction. Other polyvalent metals which can be used include lead, mercury, palladium, platinum, tungsten, nickel chromium, cobalt, vanadium, titanium, tantalum, zirconium, molybdenum, and tin. The metals are normally supplied as a salt, oxide, hydroxide, etc.

Preferred reactants are co-ordination complexes in which polyvalent metals form chelates with an acid having the general formula:

$$(X)_{3-n}—N—(Y)_n$$

wherein n is an integer from 1 to 3, Y represents a carboxyethyl or 2-carboxymethyl group and X a 2-hydroxyethyl or 2-hydroxypropyl group or an alkyl group having from 1 to 4 carbon atoms, or

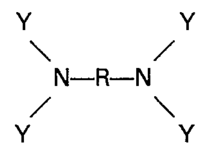

wherein:

- from 2 to 4 of the groups Y represents carboxymethyl or 2-carboxyethyl groups;
- from 0 to 2 of the groups Y represent a 2-hydroxyethyl or 2-hydroxypropyl group and
- R represents an ethylene, a trimethylene, 1-methylethylene, 1,2-cyclohexylene or 1,2-benzylene group;

or with a mixture of such acids.

The polyvalent metal chelates are readily formed in aqeous solution by reaction of an appropriate salt, oxide or hydroxide of the polyvalent metal and the chelating agent in the acid form or an alkali metal or ammonium salt thereof. Exemplary chelating agents include aminoacetic acids derived from ammonia or 2-hydroxyalkyl amines, such as glycine (aminoacetic acid), diglycine (iminodiacetic acid), NTA (nitrilotriacetic acid), a 2-hydroxyalkyl glycine; a dihydroxyalkyl glycine, and hydroxyethyl- or hydroxypropyldiglycine; aminoacetic acids derived from ethylenediamine, diethylenetriamine, 1,2-propylenediamine, and 1,3-propylenediamine, such as EDTA (ethylenediaminetetraacetic acid), HEDTA (2-hydroxyethylethylenediaminetriacetic acid), DETPA (di-ethylenetriaminepentaacetic acid); aminoacetic acid derivatives of cyclic 1,2-diamines, such as 1,2-diaminocyclohexane-N,N-tetraacetic acid, and 1,2-phenylenediamine-N,N-tetraacetic acid, and the amides of polyaminoacetic acids disclosed in U.S.—A—3,580,950. NTA and 2-hydroxyethylethylenediaminetriacetic acid are preferred, particularly iron chelates of these two acids.

The absorbents employed in this invention are those absorbents which have a high degree of

selectivity in absorbing $CO_2$ (and preferably $H_2S$ as well) from the gaseous streams. Any of the known absorbents conventionally used which do not affect the activity of the polyvalent metal ions, polyvalent metal chelate, or mixtures thereof, and which exhibit sufficient solubility for the reactant or reactants may be employed. As indicated, the absorbent preferably has good absorbency for $H_2S$ as well, in order to assist in the removal of any HS present in the gaseous streams. The particular absorbent chosen is a matter of choice, given these qualifications, and selection can be made by routine experimentation. For example, 3,6-dioxaoctanol (also referred to as "carbitol" or "diethylene glycol monoethylether"), propylene carbonate, 2,5,8,11,14-pentaoxapentadecane (also referred to as "tetraethylene glycoldimethyl ether"), N-methylpyrrolidone, tetrahydrothiophene-1,1-dioxide (also referred to as "sulfolane"), methyl isobutyl ketone, 2,4-pentanedione, 2,5-hexanedione, 2-hydroxy-2-methyl-4-pentanone (also referred to as "diacetone alcohol"), hexyl acetate, cyclohexanone, 4-methyl-3-pentene-2-one (also referred to as "mesityl oxide"), and 4-methyl-4-methoxy-pentanone-2 may be used. Suitable temperature and pressure relationships for different $CO_2$-selective absorbents are known, or can be calculated.

An absorption column might comprise two separate columns in which the solution from the lower portion of the first column would be introduced into the upper portion of the second column, the gaseous material from the upper portion of the first column being fed into the lower portion of the second column. Parallel operation of units is, of course, well within the scope of the invention.

As will be understood by those skilled in the art, the solutions or mixtures employed may contain other materials or additives for given purposes. For example, U.S.—A—3,933,993 discloses the use of buffering agents, such as phosphate and carbonate buffers. Moreover, because of the tendency of the alkanediols used in the process according to the invention towards foaming, the use of anti-foam agents, such as alkyl or alkenyl alcohols containing in the range of from 4 to 18 carbon atoms per molecule, may be necessary. Similarly, U.S.—A—4,009,251 describes various additives, such as sodium oxalate, sodium formate, sodium thiosulphate, and sodium acetate, which may be beneficial.

The invention is further illustrated by means of the following Examples.

Comparative Experiment A

Sixty (60) g of a 2M aqueous solution of iron 2-hydroxyethylethylenediaminetriacetate were added to a reaction vessel. The temperature of the liquid was raised to 60°C and oxygen was sparged through the liquid for 10 min. Following this procedurre, approximately 650 ml of C.P. hydrogen sulphide were added to the reaction vessel and allowed to react until a negative pressure (0.136 bar) was reached, or 18 min. and 30 s. Oxygen was then added to the vessel in two successive charges of 132 ml each. The time required to react the first charge of oxygen was 320 s; the second charge was fully reacted in 500 s.

Example I

In this experiment, a sixty (60) g charge of a 2M aqueous solution of iron 2-hydroxyethylethylenediaminetriacetate was added to the reaction vessel, but the solution also contained 0.5 per cent by weight, based on the solution, of 2,3-butanediol. The solution was again oxidized by oxygen sparge for 10 min. and heated to 60°C. The solution was then reacted with 650 ml of C.P. hydrogen sulphide. The hydrogen sulphide was allowed to react until a negative pressure (0.136 bar) was reached, for about 650 s. Oxygen was then added to the vessel in two successive charges of 132 ml, the first reacting out in 115 s, the second in 195 s.

Comparative Experiment B

48 g of 1.4M aqueous solution of iron nitrilotriacetate were added to a reaction vessel. The temperature of the liquid was 25°C, and oxygen was sparged through the liquid for 15 min. Following this procedure, about 500 ml of C.P. hydrogen sulphide were added to the reaction vessel and allowed to react until a negative pressure (0.136 bar) was reached. Oxygen was then added to the vessel to regenerate the charge. The time required to react 244 ml oxygen was 30 min.

Example II

In this experiment, a forty-eight (48) g charge of 1.4M aqueous solution of iron nitrilotriacetate was added to the reaction vessel, but the solution also contained 0.5 per cent by weight, based on the solution, of 2,3-butanediol. The solution was again oxidized by oxygen sparge for 15 min. at 25°C. The solution was then reacted with 500 ml of C.P. hydrogen sulphide. The hydrogen sulphide was allowed to react until a negative pressure (0.136 bar) was reached. Oxygen was then added to the vessel to regenerate the charge. The time required to react 247 ml of oxygen was 10 min.

## Claims

1. A process for the removal of $H_2S$ from a sour gaseous stream, in which process

a) the sour gaseous stream is contacted in a contacting zone at a temperature below the melting point of sulphur with a reactant solution containing an effective amount of a reactant comprising one or more ions of a polyvalent metal and/or one or more chelate compounds of a polyvalent metal and

b) a sweet gaseous stream is separated from an admixture containing crystalline sulphur and a reduced reactant, and at least a portion of the said crystalline sulphur is isolated, characterized in

that in step a an effective amount of a reaction rate modifier comprising one or more alkanediols having from 4 to 12 carbon atoms per molecule is added to the reactant solution.

2. A process as claimed in claim 1, characterized in that one or more alkanediols having from 4 to 8 carbon atoms per molecule are added as reaction rate modifier in step a).

3. A process as claimed in claim 2, characterized in that 2,3-butanediol is added as reaction rate modifier in step a).

4. A process as claimed in claim 2, characterized in that 1,4-butanediol is added as reaction rate modifier in step a).

5. A process as claimed in any one of the preceding claims, characterized in that the reaction rate modifier is added in step a) in an amount from 0.1 to 10% by weight, calculated on the reactant solution.

6. A process as claimed in any one of the preceding claims, characterized in that the reduced reactant present in the admixture separated in step b) or left behind subsequent to the isolation of sulphur, is contacted in a regeneration zone with an oxygen-containing gas, producing a regenerated reactant-containing admixture.

7. A process as claimed in claim 6, characterized in that, subsequent to the isolation of sulphur, regenerated reactant-containing admixture is returned to the contacting zone in step a).

8. A process as claimed in any one of the preceding claims, characterized in that the reactant solution in step a) is an aqueous solution.

9. A process as claimed in any one of the claims 1 to 7, characterized in that the sour gaseous stream also contains $CO_2$ and an absorbent selective for $CO_2$ is added to the reactant solution in step a), the admixture separated in step b) also containing absorbed $CO_2$.

10. A process as claimed in claim 9, characterized in that the absorbent selective for $CO_2$ is selective for $H_2S$ as well.

11. A process as claimed in claim 9 or 10, characterized in that $CO_2$ is stripped from the sulphur- and reduced reactant-containing admixture separated in step b).

12. A process as claimed in claim 9 or 10, characterized in that $CO_2$ is stripped from the admixture left behind subsequent to the isolation of the sulphur.

13. A process as claimed in any one of the preceding claims, characterized in that the sour gaseous mixture is a hydrocarbon mixture or a mixture derived from the gasification of coal.

14. A process as claimed in any one of the preceding claims, characterized in that the reactant is a co-ordination compound of a polyvalent metal with an acid having the general formula:

$$(X)_{3-n}—N—(Y)_n$$

wherein n is an integer from 1 to 3, Y represents a carboxymethyl or 2-carboxymethyl group and X a 2-hydroxyethyl or 2-hydroxypropyl group or an alkyl group having from 1 to 4 carbon atoms, or

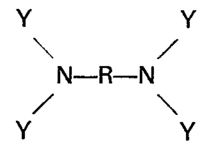

wherein:
— from 2 to 4 of the groups Y represent carboxymethyl or 2-carboxyethyl groups;
— from 0 to 2 of the groups Y represent a 2-hydroxyethyl or 2-hydroxypropyl group and
— R represents an ethylene, a trimethylene, 1-methylethylene, 1,2-cyclohexylene or 1,2-benzylene group;

or with a mixture of such acids.

15. A process as claimed in claim 14, characterized in that the reactant is a co-ordination complex of a polyvalent metal with an aminoacetic acid derived from ethylenediamine.

16. A process as claimed in claim 14, characterized in that the reactant is a co-ordination complex of a polyvalent metal with an aminoacetic acid derived from ammonia.

17. A process as claimed in any one of the preceding claims, characterized in that the polyvalent metal is iron.

18. A process as claimed in claim 17, characterized in that the reaction is a co-ordination complex of iron with 2-hydroxyethylethylenediaminetriacetic acid.

19. A process as claimed in claim 17, characterized in that the reactant is a co-ordination complex of iron with nitrilotriacetic acid.

**Revendications**

1. Procédé d'enlèvement d'$H_2S$ à partir d'un courant gazeaux corrosif, dans lequel

a) on met en contact le courant gazeux corrosif dans une zone de contact à une température inférieure au point de fusion du soufre avec une solution réactive contenant une quantité efficace de réactif comprenant un ou plusieurs ions d'un metal polyvalent et/ou un ou plusieurs composés chélates d'un métal polyvalent et

b) on sépare un courant gazeux non corrosif d'un mélange contenant du soufre cristallin et un réactif réduit, et on isole au moins une fraction dudit soufre cristallin, caractérisé en ce que dans l'étape a) on ajoute à la solution réactive une quantité efficace d'un modificateur de vitesse de réaction comprenant un ou plusieurs alcanediols ayant de 4 à 12 atomes de carbone par molécule.

2. Procédé selon la revendication 1, caractérisé en ce qu'on ajoute un ou plusieurs alcanediols ayant de 4 à 8 atomes de carbone par molécule comme modificateur de vitesse de réaction dans l'étape a).

3. Procédé selon la revendication 2, caractérisé en ce qu'on ajoute du 2,3-butanediol comme

modificateur de vitesse de réaction dans l'étape a).

4. Procédé selon la revendication 2, caractérisé en ce qu'on ajoute du 1,4-butanediol comme modificateur de vitesse de réaction dans l'étape a).

5. Procédé selon l'une quelconque des revendications précédentes, caractérisé en ce qu'on ajoute le modificateur de vitesse de réaction dans l'étape a) en une quantité allant de 0,1 à 10% en poids, calculée sur la solution réactive.

6. Procédé selon l'une quelconque des revendications précédentes, caractérisé en ce qu'on met en contact le reactif réduit présent dans le melange separé dans l'étape b) ou laissé après l'isolement du soufre, dans une zone de régénération avec un gaz contenant de l'oxygène, produisant un melange régenéré contenant le réactif.

7. Procédé selon la revendication 6, caractérisé en ce qu'après l'isolement du soufre on renvoie le mélange régénére contenant le réactif vers la zone de contact de l'étape a).

8. Procédé selon l'une quelconque des revendications precédentes, caractérisé en ce que la solution réactive de l'étape a) est une solution aqueuse.

9. Procédé selon l'une quelconque des revendications 1 à 7, caractérisé en ce que le courant gazeux corrosif contient également du $CO_2$ et en ce qu'on ajoute à la solution réactive de l'étape a) un absorbant sélectif pour le $CO_2$, le mélange séparé dans l'étape b) contenant également du $CO_2$ absorbé.

10. Procédé selon la revendication 9, caractérisé en ce que l'absorbant sélectif pour le $CO_2$ est également sélectif pour $H_2S$.

11. Procédé selon les revendications 9 et 10, caractérisé en ce qu'on enlève le $CO_2$ du mélange contenant du soufre et le réactif réduit séparé dans l'étape b).

12. Procédé selon les revendications 9 et 10, caractérisé en ce qu'on enlève le $CO_2$ du melange laissé après l'isolement du soufre.

13. Procédé selon l'une quelconque des revendications précédentes, caractérisé en ce que le mélange gazeux corrosif est un mélange hydrocarboné ou un mélange provenant de la gazéification du charbon.

14. Procédé selon l'une quelconque des revendications précédentes, caractérisé en ce que le réactif est un composé de coordination d'un métal polyvalent avec un acide de formule generale

$$(X)_{3-n}—N—(Y)_n$$

où n est un nombre entier allant de à 3, Y représente un groupe carboxyméthyle ou 2-carboxyéthyle et X est un groupe 2-hydroxyéthyle ou 2-hydroxypropyle ou un groupe alcoyle en $C_1$ à $c_4$, ou

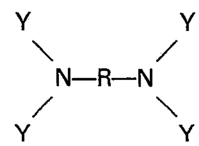

où:

— de 2 à 4 des groupes Y représentent des groupes carboxyméthyle ou 2-carboxyéthyle;
— de 0 à 2 des groupes Y représentent un groupe 2-hydroxyéthyle ou 2-hydroxypropyle et
— R représente un groupe éthylène, triméthylène, 1-méthylethylène, 1,2-cyclohexylène ou 1,2-benzylène;

ou avec un mélange de tels acides.

15. Procédé selon la revendication 14, caractérisé en ce que le réactif est un complexe de coordination d'un métal polyvalent avec un acide aminoavétique dérivé de l'éthylènediamine.

16. Procédé selon la revendication 14, caractérisé en ce que le reactif est on complexe de coordination d'un métal polyvalent avec un acide aminoacétique derivé de l'ammoniac.

17. Procédé selon l'une quelconque des revendications précédentes, caractérisé en ce que le métal polyvalent est le fer.

18. Procédé selon la revendication 17, caractérisé en ce que le réactif est un complexe de cordination d'un fer avec l'acide 2-hydroxyéthylethylènediaminetriacétique.

19. Procédé selon la revendication 17, caractérisé en ce que le réactif est un complexe de coordination d'un er avec l'acide nitrilotriacétique.

**Patentansprüche**

1. Ein Verfahren zum Entfernen von Schwefelwasserstoff aus einem sauren, gasförmigen Strom, in welchem Verfahren

a) der saure, gasförmige Strom in einer Kontaktierungszone bei einer Temperatur unterhalb des Schmelzpunktes von Schwefel mit einer Reaktionslösung in Berührung gebracht wird, welche wirksame Menge eines Reaktionsmittels, enthaltend ein oder mehrere Ionen eines mehrwertigen Metalles und/oder ein oder mehrere Chelatverbindungen eines mehrwertigen Metalles, enthält, und

b) ein schwefelarmer, gasförmigen Strom von einer Mischung abgetrennt wird, welche kristallinen Schwefel und ein reduziertes Reaktionsmittel enthält, und mindestens ein Anteil dieses kristallinen Schwefels daraus isoliert wird, dadurch gekennzeichnet, daß in Verfahrensstufe a) eine wirksame Menge eines Modifizierungsmittels für die Reaktionsgeschwindigkeit in Form von einem oder mehreren Alkandiolen mit 4 bis 12 Kohlenstoffatomen im Molekül zu der Reaktionslösung zugesetzt wird.

2. Ein Verfahren wie in Anspruch 1 beansprucht,

dadurch gekennzeichnet, daß ein oder mehrere Alkandiole mit 4 bis 8 Kohlenstoffatomen im Molekül als Modifizierungsmittel für die Reaktionsgeschwindigkeit in Stufe a) eingesetzt wird (werden).

3. Ein Verfahren wie in Anspruch 2 beansprucht, dadurch gekennzeichnet, daß 2,3-Butandiol als Modifizierungsmittel für die Reaktionsgeschwindigkeit in Stufe a) zugesetzt wird.

4. Ein Verfahren wie in Anspruch 2 beansprucht, dadurch gekennzeichnet, daß 1,4-Butandiol als Modifizierungsmittel für die Reaktionsgeschwindigkeit in Stufe a) zugesetzt wird.

5. Ein Verfahren wie in irgendeinem der vorhergehenden Ansprüche beansprucht, dadurch gekennzeichnet, daß das Modifizierungsmittel für die Reaktionsgeschwindigkeit in Stufe a) in einer Menge von 0,1 bis 10 Gewichtsprozent, berechnet auf die Reaktionslösung, zugesetzt wird.

6. Verfahren nach irgendeinem der vorhergehenden Ansprüche, dadurch gekennzeichnet, daß das reduzierte Reaktionsmittel, welches in der in Verfahrensstufe b) abgetrennten oder nach Isolierung des Schwefels zurückbleibenden Mischung vorliegt, in einer Regenerierungszone mit einem sauerstoffhaltigen Gas in Berührung gebracht wird, wodurch eine regenerierte, das Reaktionsmittel enthaltende Mischung gebildet wird.

7. Ein Verfahren wie in Anspruch 6 beansprucht, dadurch gekennzeichnet, daß die regenerierte, das Reaktionsmittel enthaltende Mischung nach der Isolierung des Schwefels zu der Kontaktierungszone in Verfahrensstufe a) zurückgeführt wird.

8. Ein Verfahren wie in irgendeinem der vorhergehenden Ansprüche beansprucht, dadurch gekennzeichnet, daß die Reaktionslösung in Verfahrensstufe a) eine wässrige Lösung ist.

9. Ein Verfahren wie in irgendeinem der Ansprüche 1 bis 7 beansprucht, dadurch gekennzeichnet, daß der saure gasförmige Strom außerdem $CO_2$ enthält und daß zu der Reaktionslösung in Verfahrensstufe a) auch ein für $CO_2$ selektiv wirkendes Absorptionsmittel zugesetzt wird und daß die in Verfahrensstufe b) abgetrennte Mischung auch absorbiertes $CO_2$ enthält.

10. Ein Verfahren wie in Anspruch 9 beansprucht, dadurch gekennzeichnet, daß das für $CO_2$ selektiv wirkende Absorptionsmittel auch selektive für $H_2S$ wirkt.

11. Ein Verfahren wie in Anspruch 9 oder 10 beansprucht, dadurch gekennzeichnet, daß $CO_2$ aus der in Verfahrensstufe abgetrennten, den Schwefel und reduziertes Reaktionsmittel enthaltenden Mischung abgetreift wird.

12. Ein Verfahren wie in Anspruch 9 oder 10 beansprucht, dadurch gekennzeichnet, daß $CO_2$ aus der nach Isolierung des Schwefels zurückbleibenden Mischung abgestreift wird.

13. Ein Verfahren wie in irgendeinem der vorhergehenden Ansprüche beansprucht, dadurch gekennzeichnet, daß die saure, gasförmige Mischung eine Kohlenwasserstoffmischung oder einer bei der Vergasung von Kohle gebildete Mischung ist.

14. Ein Verfahren wie in irgendeinem der vorhergehenden Ansprüche beansprucht, dadurch gekennzeichnet, daß das Reaktionsmittel eine Koordinationsverbindung eines mehrwertigen Metalles mit einer Säure der allgemeinen Formel

$$(X)_{3-n}—N—(Y)_n$$

ist, in welcher n eine ganze Zahl von 1 bis 3 bedeutet, Y eine Carboxymethyl- oder 2-Carboxyäthylgruppe darstellt und X eine 2-Hydroxyäthyl- oder 2-Hydroxypropylgruppe oder eine Alkylgruppe mit 1 bis 4 Kohlenstoffatomen bedeutet, oder einer Säure der nachstehenden Formel

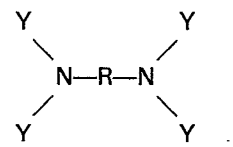

ist, in welcher:

2 bis 4 der Gruppen Y Carboxymethyl- oder 2-Carboxyäthyl-gruppen bedeuten;

0 bis 2 der Gruppen Y eine 2-Hydroxyäthyl- oder 2-Hydroxypropylgruppe darstellen und

R eine Äthylen-, Trimethylen-, 1-Methyläthylen-, 1,2-Cyclohexylen oder 1,2-Benzylengruppe darstellt; oder einer Mischung solcher Säuren ist.

15. Ein Verfahren wie in Anspruch 14 beansprucht, dadurch gekennzeichnet, daß das Reaktionsmittel ein Koordinationskomplex eines mehrwertigen Metalles mit einer von Äthylendiamin abgeleiteten Aminoessigsäure ist.

16. Ein Verfahren wie in Anspruch 14 beansprucht, dadurch gekennzeichnet, daß das Reaktionsmittel ein Koordinationskomplex eines mehrwertigen Metalles mit einer von Ammoniak abgeleiteten Aminoessigsäure ist.

17. Ein Verfahren wie in irgendeinem der vorhergehenden Ansprüche beansprucht, dadurch gekennzeichnet, daß das mehrwertige Metall Eisen ist.

18. Ein Verfahren wie in Anspruch 17 beansprucht, dadurch gekennzeichnet, daß das Reaktionsmittel ein Koordinationskomplex von Eisen mit 2-hydroxyäthylendiamintriessigsäure ist.

19. Ein Verfahren wie in Anspruch 17 beansprucht, dadurch gekennzeichnet, daß das Reaktionsmittel ein Koordinationskomplex von Eisen mit Nitrilotriessigsäure ist.